Europäisches Patentamt

European Patent Office

Office européen des brevets

(19)

(11) Publication number: **0 020 004**
**A1**

(12) **EUROPEAN PATENT APPLICATION**

(21) Application number: **80301198.0**

(22) Date of filing: **16.04.80**

(51) Int. Cl.³: **D 21 H 3/50,** C 08 G 8/28,
B 32 B 31/00

(30) Priority: **28.05.79 CA 328458**

(43) Date of publication of application: **10.12.80**
**Bulletin 80/25**

(84) Designated Contracting States: **BE CH DE FR GB IT LI
NL SE**

(71) Applicant: **CYANAMID CANADA INC., 635 Dorchester
Boulevard West, Montreal, 101, Quebec (CA)**

(72) Inventor: **Sibalis, Jack I., 77 Union Boulevard, St.
Lambert, P.Q. JHR 2N4 (CA)**
Inventor: **Rosario, Raymond Benedict Francis,
665 Terrasse Jacques Leonard, Pointe-Aux-Tremdles,
P.Q. (CA)**

(74) Representative: **Allam, Peter Clerk et al, LLOYD WISE,
TREGEAR & CO. Norman House 105-109 Strand, London
WC2R 0AE (GB)**

(54) **Laminates containing lignosulfonate-extended phenolic resins and process for manufacturing same.**

(57) Lignosulfonate extended phenol-formaldehyde resins are employed in the manufacture of heat- and pressure-consolidated laminates in order to decrease the requirements of phenolic resin used for impregnating the core laminae of the laminate and to enhance environmental quality by reducing residual phenols, formaldehydes and organic solvents used in laminate manufacture.

EP 0 020 004 A1

27,443

TITLE MODIFIED
see front page

PROCESS FOR MANUFACTURE OF LAMINATES EMPLOYING LIGNO-
SULFONATE EXTENDED PHENOLIC RESINS

Background of the Invention

The present invention relates to the process of manufacturing laminates and, more particularly, the process of manufacturing laminates wherein lignosulfonate extended phenolic resins are employed for impregnating the core laminae of the laminate.

Laminates, as their name suggests, consist of layers, or laminae, held together by a suitable binder. The laminae are usually materials such as paper, woven fabrics, mats or felts that are readily available in continuous sheet form. The binders are synthetic resins, frequently phenolic resins that are impregnated into the core laminae. After drying, several laminae are placed upon one another and the entire mass is consolidated under heat and pressure to form a rigid, infusible sheet which may be used for its mechanical, electrical, chemical or esthetic qualities.

Paper is by far the most widely used laminating base. It is virtually the only core material used in decorative laminates and probably reinforces 50% of the industrial laminates on a squarefoot basis. Since several varieties of fiber are used in paper, the term paper, as used herein, will mean a cellulose fiber material unless otherwise noted. The most common paper is that derived from the Kraft process which, combined with phenolic resin, forms the structural core for decorative laminates and for low-cost mechanical and electrical grades of industrial laminates. It is strong, cheap, plentiful, can be made moisture and fire-resistant, and machines readily.

Crepe papers are preferably used to obtain a degree of stretch in laminates during postfabrication. These are commonly present in postformable laminates and are usually Kraft papers containing resins or other agents which make creping possible. A so-called X-crepe is preferred; that is, a paper creped in two directions which are approximately at 45° to the long axis of the paper. X-creping allows the laminate produced therefrom to be formed in almost any direction.

In decorative laminates, a decor layer is placed above the laminate core; typically thoroughly refined alpha- -cellulose papers are used for the decor layer. One of these papers is heavily loaded with a suitable pigment, printed with a suitable print, pattern or design, impregnated with about 35-40% melamine-formaldehyde resin and bonded directly to the laminating core mentioned above. To protect the print from external abuse; a lighter, very clean, nonpigmented alpha cellulose paper is placed above the print. This alpha cellulose paper, or overlay, is impregnated with about 65% melamine-formaldehyde resin. The overlay acts as a carrier and reinforces the melamine-formaldehyde resin, thereby preventing crazing.

In most laminates, the laminate core is generally prepared by saturating a Kraft paper with a solution of phenol-formaldehyde resin in the resole stage. The saturated paper is then permitted to dry and a plurality of the dried papers are laid, in a face-to-face relationship, upon one another. In decorative laminates, an alpha cellulose decor sheet and some form of protective layering impregnated with a melamine-formaldehyde resin are placed above the laminating base. The assembled stack, when subjected to heat and pressure, becomes fused into the finished laminate.

Phenol-formaldehyde has generally been the preferred laminating resin because of its high degree of asso-

- 3 -

ciation with cellulose and its ability to render an increased water resistance to the paper, thus imparting dimensional stability to the laminate. These phenol-formaldehyde resins, although water soluble at low molecular weights, often require the use of solvents other than water to maintain their solubility during the application operation. Suitable solvents have included methyl, ethyl and propyl alcohols as well as toluene.

The increased demand for laminates has, however, produced a correspondingly increased demand on the component materials. This demand has caused shortages and rising costs throughout the industry. To combat these problems it has become necessary to look for new ways to increase the supply of these phenolic resins and decrease their steadily rising costs. Additionally, the enhanced awareness of environmental quality has made it desirable to reduce the residual phenols, formaldehydes and organic solvents that are apt to escape into the atmosphere or present disposal problems in conjunction with the manufacture of these phenolic resins or their use in laminate production.

Recently, the use of lignin extended phenol-formaldehyde resins has been suggested as one means to overcome these problems. Lignin itself occurs in many living plants and grasses. Considering that approximately six (6) million tons of lignin is either burned or disposed of in pulp mill effluents annually in the United States alone, this represents a potential source of supply in that wood is one of the few renewable resources. The disadvantage of this process however lies in the complex operations necessary to isolate pure lignin and the costs associated with this isolation.

There exists, therefore, the need for a laminating resin which will incur lower manufacturing costs, be available in plentiful quantities, exhibit environmentally acceptable characteristics and still be capable of meeting the necessary requirements of strength, stability and water--resistance when used for commercial laminates.

## Summary of the Invention

The present invention provides a process for the manufacture of laminates employing a lignosulfonate extended phenolic resin for use in the laminate core. Utilization of this laminating resin decreases the quantities of phenols, formaldehydes and organic solvents employed in the manufacture of a laminating resin and therefore correspondingly reduces the cost of the manufactured laminate. This reduced quantity of resin components reduces the residual materials generated in the manufacture of the laminating resin thereby enhancing the overall quality of the environment. The suitability of laminates impregnated with the lignosulfonate extended phenol-formaldehyde resin have been established through a series of tests that have shown these laminates as fully meeting the requirements of strength, stability and water-resistance.

## Detailed Description Of The Invention

In accordance with the present invention there is provided a method of producing a heat and pressure consolidated laminate which comprises consolidating an assembly between press plates, the assembly comprising, in superimposed relation, a laminate core comprising a plurality of individual sheet members impregnated with a lignosulfate salt extended phenol-formaldehyde thermosetting resin, a fibrous decor sheet impregnated with a melamine-formaldehyde thermosetting resin and an overlay layer impregnated with a melamine-formaldehyde thermosetting resin; subjecting the assembly to a curing pressure and temperature to effect thermosetting; and recovering the resultant laminate.

The laminate core of the present invention contains a plurality of cellulosic sheets impregnated with the lignosulfonate extended phenol-formaldehyde resin, preferably six sheets. These sheets can be caried in material in accordance with the particular properties desired in the laminate. Typically, paper is the material employed in the laminate core. In the instant invention a Kraft paper of about a 90 to 125 pound basis weight per 3000 square foot ream is preferred in the stock material from which the core sheets are prepared.

Lignosulfonates, used in the preparation of the laminating resin of the present invention are yellow to dark brown amorphous powder. These lignosulfonates are derived from the black liquor of the kraft pulping process by acidifying the black liquor. They may be purchased commercially from most pulp manufacturers in the form of ammonium or sodium salts, however, the ammonium salt of lignosulfonate is preferred. The salt form is preferred because they are extremely water-soluble in that they are derived from strong acids; additionally, they can tolerate being mixed with methanol based phenol-formaldehyde resins without precipitating out. The molecular weight of lignosulfonate generally ranges up to about 15,000, preferably from about 1,500 to about 15,000 in the instant invention.

The lignosulfonate extended laminating resin employed in the present invention is prepared by refluxing a mixture of phenol and formaldehyde in the presence of a catalyst which may be added all at once, or incrementally, for approximately 10 to 20 minutes under atmospheric pressure or, alternatively, for 20 to 100 minutes under vacuum pressure. The phenol to formaldehyde mole ratio is in the range of about 1:1.2 to 1:2.0, preferably about 1:1.6. The endpoint of the reflux can be determined by checking the water tolerance of the resin prepared in 25°C water. When the water tolerance is approximately in the range of 250-100%, the reflux is complete. Urea crystals are next added while the solution is agitated for approximately 5 minutes. The charge is then dehydrated, if so desired, for about 2 hours under vacuum to provide a more concentrated resol solution. At this point an aqueous solution of an ammonium salt of lignosulfonate is added in the effective amount, preferably such that less than about 15% lignosulfonate extended resin has been prepared. The solution is vigorously mixed until a uniform resin is achieved.

The laminating base sheets are then impregnated with the lignosulfonate extended phenol-formaldehyde resin. This is performed by passing the base sheets through an impregnating bath containing the resin.    The resin bath is a 50% solution of the lignosulfonate extended phenol--formaldehyde resin.    The laminate base sheets have a resin solids content in the range of about 20% to about 40%, preferably about 40% after impregnation.    These sheets are then dried by passing them through a forced air drying oven with a temperature between 140°C and 170°C. The resultant impregnated base sheet has a volatile content within the range of 3 to 10%.

The core laminae may be combined with a decor sheet, typically a suitable print, pattern or design. The decor sheet is impregnated with a melamine-formaldehyde resin in an amount equal to about 35% to 40% of the decor sheet.    Additionally, an overlay sheet providing protection to the decor sheet from external abuse may be provided.    This sheet is also an alpha-cellulose paper impregnated with a melamine-formaldehyde resin.    The overlay sheet needs to be of a transparent or translucent nature to allow the decor sheet to show through and thus a highly refined alpha-cellulose sheet is employed.    This overlay sheet is generally impregnated with about 65% melamine-formaldehyde resin to impart strength and resistance to the sheet.

Preferably, the above-mentioned sheets are then assembled such that approximately six (6) impregnated sheets constitute a core layer, typically in face-to-face relation, on top of this can be placed the decor sheet with its print, pattern or design facing outward, and on top of this can be placed the overlay sheet.    The assembly is placed between two stainless steel plates and subjected to a curing temperature and pressure for approximately 20 minutes.    This curing pressure is in excess of 1,000 psi and at a temperature of between about 120°C to about 180°C.

The following specific examples illustrate certain aspects of the present invention, and more particularly, point out methods of evaluating the properties of laminates employing a lignosulfonate extended phenol-formaldehyde resin. However, the examples are set forth for illustration only and are not to be construed as limitations on the present invention except as set forth in the appended claims. All parts and percentages are by weight unless otherwise specified.

## Example 1

The following is illustrative of the preparation of a lignosulfonate extended phenol-formaldehyde resin for use in the present invention:

PART A

Into a suitable reaction vessel equipped with a thermometer, stirrer and reflux condenser is introduced 2160 parts of phenol and 2452 parts of formaldehyde, the added formaldehyde being in the form of a 45% aqueous solution. To this mixture is added 47.8 parts of a 50% sodium hydroxide solution as the catalyst. Constant agitation is then commenced while the charge is heated. The charge is held at its reflux temperature (approximately 100°C) for the period of time necessary for the resin solution to exhibit a 250% water tolerance in 25°C. water, this period being on the order of 15 minutes.

The system is then cooled to about 60°C. whereupon there is added 50 parts of urea crystals. The charge is then dehydrated for about two (2) hours under vacuum until a homogeneous solution is achieved and about 1344 parts of water are removed. To this concentrated resol solution there are then added 624 parts of methanol. The resultant mixture is then stirred and allowed to cool to room temperature. The resulting resinous composition has a pH on the order of 8.3, a solids content of 67% and a viscosity of 250 cps. The final phenol to formaldehyde mole ratio is on the order of 1:1.6.

PART B

Into a suitable vessel equipped with a stirrer there are introduced 48 parts of an ammonium salt lignosulfonate in the form of a 50% aqueous solution. The ammonium salt lignosulfonate has a pH of 4.0 and a molecular weight in the range of 1,500 to 15,000. Such ammonium salt lignosulfonates are commercially available from most kraft pulp suppliers. To this lignosulfonate solution there is added 2.4 parts of 28% aqueous ammonia. The mixture is agitated resulting in a final solution having a pH of 9.0.

PART C

Into a suitable vessel equipped with a stirrer there is introduced 370 parts of the solution of Part A and 50 parts of the solution of Part B. The mixture is vigorously stirred until a uniform resinous composition is achieved. The resulting lignosulfonate extended phenol-formaldehyde resin has a pH of 7.4 and has a lignosulfonate content of 10 weight percent based on the lignosulfonate and phenol-formaldehyde solids.

### Comparative Example A

A 115 pound basis weight, 3000 square foot ream of saturating grade Kraft paper is continuously fed into an impregnating bath containing the phenol-formaldehyde resin of Example 1, Part A only. The resultant, impregnated paper is then passed through a forced air drying oven having a temperature of 127°C. at the rate of 100 feet per minute. The resulting dry impregnated paper has a resin content of 28% based on the bone dry weight of the paper and a volatile content of 4.5%.

The impregnated paper is then cut into laminate sheet size and six of these sheets are then assembled into a core layer. On top of the core layer is placed a commercially available melamine-formaldehyde resin impregnated alpha-cellulose decor sheet bearing a gossamer design with the design facing upward. On top of the decor sheet is placed a commercially available, highly refined alpha-cellulose overlay sheet impregnated with a melamine-formaldehyde resin.

The assembly is placed between two polished stainless steel press plates and subjected to a 1400 psi pressure at a temperature of 135°C. to 145°C. for 20 minute to effect thermosetting and cure. Following lamination the assembly is cooled to room temperature and a test sheet is cut for testing. Test results are given in Table I.

### Example 2

The procedure of Comparative Example A is followed in every material detail except that the laminating resin employed in the impregnation of the core sheet is the lignosulfonate extended phenol-formaldehyde resin of Example 1, Part C. Test results are given in Table I.

### Example 3

The procedure of Example 1 is followed in every material detail except that the ratio of Part A solution to Part B solution is altered so that the resultant lignosulfonate extended phenol-formaldehyde resin contains 15 weight percent of lignosulfonate based on the lignosulfonate and phenol-formaldehyde solids.

### Example 4

The procedure of Comparative Example A is followed in every material detail except that the laminating resin employed in the impregnation of the core sheets is the lignosulfonate extended phenol-formaldehyde resin of Example 3. Test results are given in Table I.

### Example 5

The procedure of Example 1 is followed in every material detail except that the ammonium salt lignosulfonate employed in Part B is replaced by an equivalent amount of an ammonium salt of a lignosulfonate having a molecular weight in the range of 1,000 to 1,500 inclusive.

### Example 6

The procedure of Comparative Example A is followed in every material detail except that the laminating resin employed in the impregnation of the core sheets is the lignosulfonate extended phenol-formaldehyde resin of Example 5. Test results are given in Table I.

TABLE I

| TEST NAME | NEMA LD# | COMPARATIVE A | 2 | 4 | 6 |
|---|---|---|---|---|---|
| Impact Resistance/Fracture (inch). | 3 - 3 .03 | 36/37 | 63/64 | - | - |
| Dimensional Change | 1 - 2.08 | | | | |
| % Length | | 0.23 | 0.21 | 0.29 | 0.36 |
| % Cross | | 0.53 | 0.60 | 0.86 | - |
| Cigarette Resistance (seconds) | 1 - 2.04 | 129 | 118 | 104 | 103 |
| Water Absorption % | C5-176-58 4.1.6 | 6.9 | 8.4 | 5.4 | 5.0 |
| Thickness Swelling % | C5-176-58 4.1.6 | 6.7 | 9.1 | 5.1 | 3.7 |
| Radial Crack Resistance after 28 day, 10% RH, 70°F. ±2.0° (inch) | - | 0.11 | 1.05 | - | - |
| Small Scale Stress Crack (hours) | - | 42 | 38 | 7 | 12 |
| 7-day Water Soak | - | No Effect 7th day | No Effect 7th day | Blister 6th day | Blister 3rd day |

## Example 7

PART A

Into a suitable reaction vessel equipped with a thermometer, stirrer and reflux condenser is introduced 2160 parts of phenol and 2452 parts of formaldehyde, the added formaldehyde being in the form of a 45% aqueous solution. To this mixture is added 20 parts of a 50% sodium hydroxide solution as the catalyst. Constant agitation and cooling is maintained during the additions. The charge is then gradually heated while the reaction vessel is put under vacuum (10-85°C. The vacuum and cooling is adjusted to maintain this temperature range.

After 30 minutes of reflux another 20 parts of 50% sldium hydroxide is added under vacuum at 80-85°C.

After 60 minutes from start of reflux another 20 parts (third addition) of 50% sodiumhydroxide is added under vacuum and reflux is continued for 30 minutes. At the end of this period, the charge is rapidly cooled and subjected to full vacuum. 255 Parts water are distilled off and the batch is then cooled. The resulting resinous composition has a pH of the order of 8.4, and a solids content of 57%.

PART B

Into a suitable vessel equipped with a stirrer is introduced 48 parts of an ammonium lignosulfonate salt in powder form. The ammonium lignosulfonate salt has a pH of 4.0 and a molecular weight in the range 1,500 to 15,000. Such ammonium salt lignosulfonates are commercially available from most kraft pulp suppliers. To this powder is added 50 parts water and 2.4 parts of a 28% aqueous ammonia solution. The mixture is agitated resulting in a final solution having a pH of 9.0.

PART C

Into a suitable vessel equipped with a stirrer there is introduced 420 parts of the solution of Part A and 50 parts of the solution of Part B. The mixture is vigorously stirred until a uniform resinous composition is achieved. The resulting lignosulfonate extended phenol-formaldehyde resin has a pH of 7.4 and has a lignosulfonate content of 10 weight percent based on the lignosulfonate and phenol-formaldehyde solids.

## Comparative Example B

A 115 pound basis weight, 3000 square foot ream of saturated grade kraft paper is continuously fed into an impregnating bath containing the phenol-formaldehyde resin of Example 7, Part A only. The resultant impregnated paper is then passed through a forced air dry oven having a temperature of 127°C. at the rate of 100 feet per minute. The resulting dry impregnated paper has a resin content of 28% based on the bone dry weight of the paper and a volatile content of 4.5%.

The impregnated paper is then cut into laminate sheet size and six of these sheets are then assembled into a core layer. On top of the core layer is placed a commercially available melamine-formaldehyde resin impregnated alpha-cellulose decor sheet bearing a gossamer design with the design facing upwards. On top of the decor sheet is placed a commercially available, highly refined alpha-cellulose overlay sheet impregnated with a melamine-formaldehyde resin.

The assembly is placed between two polished stainless steel press plates and subjected to a 1400 psi pressure at a temperature of 135°C to 145°C for 20 minutes to effect thermosetting and cure. Following lamination, the assembly is cooled to room temperature and a test sheet is cut for testing. Test results are given in Table II.

## Example 8

The procedure of Comparative Example B is followed in every material detail except that the laminating resin employed in the impregnation of the core sheet is the lignosulfonate extended phenol-formaldehyde resin of Example 7, Part C. Test results are given in Table II.

## Example 9

The procedure of Example 7 is followed in every material detail except that the ratio of Part A solution to Part B solution is altered so that the resultant lignosulfonate extended phenol-formaldehyde resin contains 15 weight percent of lignosulfonate based on the lignosulfonate and phenol-formaldehyde solids.

## Example 10

The procedure of Comparative Example B is followed in every material detail except that the laminating resin employed in the impregnation of the core sheets is the lignosulfonate extended phenol-formaldehyde resin of Example 9. Test results are given in Table II.

## Example 11

The procedure of Comparative Example B is followed in every material detail except that the ammonium salt lignosulfonate employed in Part B is replaced by an equivalent amount of an ammonium salt of a lignosulfonate having a molecular weight in the range of 1,000 to 1,500 inclusive.

## Example 12

The procedure of Comparative Example B is followed in every material detail except that the laminating resin employed in the impregnation of the core sheets is the lignosulfonate extended phenol-formaldehyde resin of Example 11. Test results are given in Table II.

TABLE II

| TEST NAME | NEMA ID# | COMPARATIVE SAMPLE B | 8 | 10 | 12 |
|---|---|---|---|---|---|
| Dimensional Change | 3 - 3.04 | | | | |
| % Length | | .11 | .26 | .3 | .29 |
| % Cross | | .265 | .55 | .6 | .70 |
| Cigarette Resistance (seconds) | 3 - 3.07 | 120 | 130 | 180 | 150 |
| Water Absorption % | CS-176-58 4.1.6 | 6.25 | 3.88 | 5.5 | 5.6 |
| Thickness Swell % | " | 6.90 | 3.77 | 5.0 | 5.5 |
| Stress Crack Resistance (hours) | – | 45 | 18 | 17 | 16 |
| 7 - Day Soak | – | No effect 7 days | Blister 5th day | Blister 4th day | Blister 4th day |

CLAIMS:

1.  A heat- and pressure- consolidated laminate including a laminate core comprising a plurality of individual sheet members impregnated with a thermosetting resin, characterised in that said thermosetting resin is a lignosulfonate salt-extended phenol-formaldehyde resin.

2.  A laminate according to Claim 1, characterised in that the lignosulfonate salt extended phenol--formaldehyde has a mole ratio of formaldehyde to phenol from about 1.2:1 to 2.0:1, inclusive.

3.  A laminate according to Claim 1 or Claim 2, characterised in that the amount of lignosulfonate salt in the lignosulfonate salt extended phenol-formaldehyde resin is less than about 15% of the total resin.

4.  A laminate according to any preceding claim, characterised in that the lignosulfonate salt employed is an ammonium salt.

5.  A laminate according to any preceding claim, characterised in that the lignosulfonate salt employed has a molecular weight of about 1,500 to 15,000, inclusive.

6.  A method of producing a heat- and pressure-consolidated laminate wherein superimposed laminae, including a plurality of thermosetting resin-impregnated sheets which are to form the core of the laminate, are consolidated between press plates and subjected to a curing pressure and temperature to effect thermosetting of said resin, characterised in that said thermosetting resin impregnating said core sheets is a lignosulfonate salt-extended phenol-formaldehyde resin.

7.  A method according to Claim 6, characterised in that said lignosulfonate salt-extended phenol-formaldehyde resin is as defined in any one of Claims 2 to 5.

- 2 -

0020004

8. A method according to Claim 7, characterised in that said superimposed laminae include also a fibrous decor sheet impregnated with a melamine-formaldehyde thermosetting resin, and an overlay layer impregnated with a melamine-formaldehyde thermosetting resin.

| Category | Citation of document with indication, where appropriate, of relevant passages | Relevant to claim |
|---|---|---|
| | US - A - 3 677 884 (L.F. BORNSTEIN) <br> * Column 1, lines 39-45; column 2, lines 25-72; column 3, lines 1-70; column 4, lines 62-75 * <br><br> -- | 1,6 |
| | US - A - 3 597 375 (C.H. LUDWIG et al.) <br> * Column 2, lines 13-22; column 3, lines 13-75; column 4, lines 1-43; column 5, lines 35-53 * <br><br> -- | 1,2,3, 6,7 |
| A | FR - A - 1 357 157 (WEST VIRGINIA PULP and PAPER CO.) | |
| A | FR - A - 1 257 901 (RAYONIER) | |
| A | DE - A - 2 408 441 (AB. CASCO) | |
| A | DE - A - 2 406 887 (FRAUNHOFER) | |
| A | US - A - 4 058 403 (K. FUNABIKI et al.) | |
| A | US - A - 3 931 072 (R.P. COYLE) <br><br> ---- | |

**DOCUMENTS CONSIDERED TO BE RELEVANT**

**CLASSIFICATION OF THE APPLICATION (Int. Cl. 3)**

D 21 H 3/50
C 08 G 8/28
B 32 B 31/00

**TECHNICAL FIELDS SEARCHED (Int.Cl. 3)**

C 08 L 97/00
C 08 G 8/28
D 21 H 3/02
D 21 H 3/50
B 32 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-09-1980 | VAN THIELEN |

EPO Form 1503.1  06.78